# EUROPÄISCHE PATENTSCHRIFT

(11) **EP 1 290 321 B1**
(45) Veröffentlichungstag und Bekanntmachung des Hinweises auf die Patenterteilung: **05.07.2006**
(21) Anmeldenummer: 01951347.2
(22) Anmeldetag: 19.05.2001
(51) Int. Cl.: F02B 23/10, F02M 61/18

(54) **BRENNSTOFFEINSPRITZSYSTEM**
FUEL INJECTION SYSTEM
SYSTEME D'INJECTION DE CARBURANT

(30) Priorität: 26.05.2000 DE 10026321
(43) Veröffentlichungstag der Anmeldung: 12.03.2003
(73) Patentinhaber: ROBERT BOSCH GMBH, 70442 Stuttgart (DE)
(72) Erfinder: ZIEGLER, Ewald, 71296 Heimsheim (DE); ARNDT, Stefan, 70569 Stuttgart (DE); WUERFEL, Gernot, 71665 Vaihingen/Enz (DE); POHLMANN, Jens, 71701 Schwieberdingen (DE)
(86) Internationale Anmeldenummer: PCT/DE2001/001915
(87) Internationale Veröffentlichungsnummer: WO 2001/090544

(56) Entgegenhaltungen:
- DE-A- 19 804 463
- DE-C- 19 642 653
- US-A- 2 484 009
- US-A- 3 572 298
- US-A- 4 686 941
- US-A- 4 721 081
- US-A- 5 170 758

## Beschreibung

### Stand der Technik

Die Erfindung geht aus von einem Brennstoffeinspritzsystem nach der Gattung des Anspruchs 1.

Bei gemischverdichtenden, fremdgezündeten Brennkraftmaschinen mit innerer Gemischbildung ist für den Schichtladebetrieb im Zündkerzenbereich eine "Gemischwolke" erforderlich, die ein bestimmtes Brennstoff-Luftverhältnis im zündfähigen Bereich aufweist. Zu diesem Zweck werden Brennstoffeinspritzventile mit Düsen eingesetzt, die nach innen oder nach außen öffnen und einen Kegelstrahl erzeugen.

Beispielsweise ist aus der DE 198 04 463 A1 ein Brennstoffeinspritzsystem für gemischverdichtende, fremdgezündete Brennkraftmaschinen bekannt, welches mit wenigstens einem Brennstoffeinspritzventil, das Brennstoff in einen von einer Kolben-/Zylinder-Anordnung gebildeten Brennraum einspritzt und mit einer in den Brennraum ragenden Zündkerze versehen ist. Das Brennstoffeinspritzventil ist dabei mit wenigstens einer Reihe von über den Umfang eines Düsenkörpers des Brennstoffeinspritzventils verteilt angeordneten Einspritzlöchern versehen. Durch eine gezielte Einspritzung von Brennstoff über die Einspritzlöcher wird ein strahlgeführtes Brennverfahren durch Bildung einer Gemischwolke realisiert, wobei wenigstens ein Strahl in Richtung auf die Zündkerze gerichtet ist. Weitere Strahlen sorgen dafür, daß eine wenigstens annähernd geschlossene bzw. zusammenhängende Gemischwolke gebildet wird.

Aus der DE 196 42 653 C1 ist ein Verfahren zur Bildung eines zündfähigen Brennstoff-Luftgemisches bekannt. In den Zylindern von direkt einspritzenden Brennkraftmaschinen ist ein zündfähiges Brennstoff-Luftgemisch bildbar, indem in jeden von einem Kolben begrenzten Brennraum mittels eines Injektors bei Freigabe einer Düsenöffnung durch Abheben eines Ventilgliedes von einem die Düsenöffnung umfassenden Ventilsitz Brennstoff eingespritzt wird. Um unter allen Betriebsbedingungen der Brennkraftmaschine, insbesondere im Schichtladebetrieb, eine verbrauchs- und emissionsoptimierte Gemischbildung in jedem Betriebspunkt des gesamten Kennfeldes zu ermöglichen, ist vorgesehen, daß der Öffnungshub des Ventilgliedes und die Einspritzzeit variabel einstellbar sind.

Auch aus der DE 38 08 635 C2 ist eine Brennstoffeinspritzvorrichtung zum direkten Einspritzen von Brennstoff in den Zylinder einer gemischverdichtenden Brennkraftmaschine bekannt. Die Brennstoffeinspritzvorrichtung umfaßt dabei ein Brennstoffeinspritzventil, das in der Zylinderwand in einigem Abstand vom Zylinderkopf und gegenüber der Auslaßöffnung angeordnet ist und eine Ausgangsöffnung aufweist, wobei die Strahlachse des Einspritzventils auf den Bereich um die im Zylinderkopf angeordnete Zündkerze gerichtet ist. Das Brennstoffeinspritzventil weist dabei eine magnetbetätigte Ventilnadel mit schraubenförmigen Drallnuten zum Erzeugen einer Drallströmung des Einspritzstrahls auf. Die Gesamtquerschnittsfläche der Drallnuten ist um mindestens die Hälfte kleiner als die Querschnittsfläche der Ausgangsöffnung, wobei das Brennstoffeinspritzventil oberhalb der Spülöffnung angeordnet ist und mit seiner Strahlachse auf den in der Zylinderkopfmitte angeordneten Zündpunkt zeigt.

Mit den aus den obengenannten Druckschriften bekannten Einspritzsystemen werden mehrheitlich wandgeführte Brennverfahren realisiert. Dieses Brennverfahren ist sehr stark von der einströmenden Luftbewegung abhängig, die die Aufgabe hat, ein zündfähiges Brennstoff-Luftgemisch über den gesamten Kennfeldbereich des Schichtladebetriebs exakt in den Elektrodenbereich der Zündkerze zu transportieren. Beim wandgeführten Brennverfahren wird der Brennstoff durch Unterstützung durch mehr oder weniger zerklüftete Brennraumgeometrien unter gleichzeitiger Gemischbildung zur Zündkerze getragen.

Der Gemischtransport zur Zündkerze gelingt bei wand- und luftgeführten Brennverfahren im Leerlauf- und unteren Teillastbetrieb nur sehr unvollkommen, im mittleren Teillastbetrieb zum Teil nur mit unvertretbar geringen Serienstreuungen der verwendeten Hochdruckeinspritzventile bzw. der Strömungsführung durch das Saugrohr. Die mangelhafte Reproduzierbarkeit zeigt sich vor allem an überhöhten Emissionen von unverbrannten Kohlenwasserstoffen, verursacht durch einzelne Verbrennungsaussetzer. Diese Eigenschaften führen zu einem weiteren gravierenden Nachteil der beiden erwähnten Brennverfahren: Der Motor kann im Leerlauf- und unteren Teillastbereich nicht ungedrosselt gefahren werden, da aufgrund des großen Abstands zwischen Brennstoffeinspritzventil und Zündkerze kleinere Einspritzmengen nicht mehr in der für eine stabile Entflammung erforderlichen Gemischkonzentration die Zündkerze erreichen. Das bedeutet, daß das Brennstoff-Luftgemisch an den Kerzenelektroden zu mager wird. Durch die Ansaugluftdrosselung verringert sich jedoch der Verbrauchsvorteil gegenüber fremdgezündeten, gemischverdichtenden Brennkraftmaschinen mit Saugrohreinspritzung.

Aus der US 5,170,758 A ist bereits ein Brennstoffeinspritzsystem für Brennkraftmaschinen mit mindestens einem Brennstoffeinspritzventil bekannt, das Brennstoff in einen Brennraum einspritzt, der von einer Zylinderwandung begrenzt ist, in der ein Kolben geführt ist. Das Brennstoffeinspritzsystem umfasst des weiteren eine in den Brennraum ragende Zündkerze, wobei das Brennstoffeinspritzventil in dem Brennraum mehrere Einspritzstrahlen erzeugt und dabei mindestens vier Einspritzstrahlen in den Brennraum eingespritzt werden, wobei tangential zur Zündkerze eingespritzte innere Einspritzstrahlen einen vorgegebenen ersten Winkel einschließen, während äußere Einspritzstrahlen mit den inneren Einspritzstrahlen jeweils einen vorgegebenen zweiten Winkel einschließen. Die Einspritzstrahlen sind dabei derart ausgerichtet, dass in einem der Zündkerze zugewandten und in einem von der Zündkerze abgelegenen Bereich zumindest eine Lücke der Einspritzstrahlen vorgesehen ist. Die Größe des Winkels zwischen den beiden inneren Einspritzstrahlen beträgt etwa 50° bis 60°. Die äußeren Einspritzstrahlen schließen mit den jeweils benachbarten inneren Einspritzstrahlen einen vorgegebenen zweiten Winkel von etwa je 45° bis 50° ein. Die Winkel zwischen jeweils zwei benachbarten Einspritzstrahlen sind stets größer als 40°, so dass diese sich möglichst ohne gegenseitige Berührung in unterschiedliche Richtungen des Brennraums, insbesondere in der in dem Kolben vorgesehenen Kolbenmulde ausbreiten können. Insofern sind die Einspritzlöcher an dem Brennstoffeinspritzventil in der Weise angeordnet, dass bei dieser bekannten Ausführung separierte Einspritzstrahlen in gewünschte Richtungen mit einem relativ großen Winkelabstand abgespritzt werden.

### Vorteile der Erfindung

Das erfindungsgemäße Brennstoffeinspritzsystem mit den kennzeichnenden Merkmalen des Anspruchs 1 hat demgegenüber den Vorteil, daß das Gemisch im Bereich der Zündkerze aufgrund des Winkelausschnitts nicht zu fett ist.

Von Vorteil ist auch, daß die Zündkerze weniger verrußt, die Thermoschockbelastung vermindert und die Zündwinkelunempfindlichkeit bei festem Einspritzzeitpunkt im gesamten Kennfeld, in dem Schichtbetrieb gefahren wird, verbessert wird. Einspritzung und Zündung (bzw. auch umgekehrt) können gleichzeitig erfolgen.

Von Vorteil ist außerdem, daß der Zündfunke aufgrund der hohen Einspritzgeschwindigkeit nicht ausgeblasen werden kann, da die Tropfengeschwindigkeit in der Strahlmitte am höchsten ist und auf der Winkelhalbierenden der beiden Einspritzstrahlen, die den Zündkerzenbereich begrenzen, den Anforderungen bezüglich Kraftstoff-Luftgemisch-Qualität und Strömungsgeschwindigkeit genau entspricht.

Von Vorteil ist außerdem, daß die Empfindlichkeit der Einbautiefe der Zündkerze geringer ist.

Der Einspritzstrahl wird vorteilhaft durch eine Vielzahl von Spritzlöchern gebildet. Dabei können die Spritzlöcher vorteilhaft in mehreren versetzt zueinander angeordneten Reihen angeordnet sein.

Durch die in den Ansprüchen 2 bis 5 aufgeführten Maßnahmen sind vorteilhafte Weiterbildungen des im Anspruch 1 angegebenen Brennstoffeinspritzsystems möglich.

Zeichnung

Ausführungsbeispiele der Erfindung sind in der Zeichnung vereinfacht dargestellt und in der nachfolgenden Beschreibung näher erläutert. Es zeigen:
- Fig. 1: einen schematischen axialen Schnitt durch ein Ausführungsbeispiel eines erfindungsgemäßen Brennstoffeinspritzsystems,
- Fig. 2: den in Fig. 1 mit II-II bezeichneten Schnitt durch den Zylinderkopf des in Fig. 1 dargestellten Ausführungsbeispiels des erfindungsgemäßen Brennstoffeinspritzsystems,
- Fig. 3: eine schematische Darstellung eines ersten Strahlbildes, welches durch das beschriebene Brennstoffeinspritzsystem erzeugt wird,
- Fig. 4A und 4B: eine schematische Darstellung eines zweiten Strahlbildes, welches von einem Ausführungsbeispiel des erfindungsgemäßen Brennstoffeinspritzsystems erzeugt wird, und
- Fig. 4C: die Anordnung von Spritzlöchern zur Erzeugung der Strahlbilder,
- Fig. 5A-C: Diagramme der Kohlenwasserstoff- und Stickoxydemissionen sowie des spezifischen Brennstoffverbrauchs jeweils für ein Brennstoffeinspritzsystem mit und ohne erfindungsgemäßen Winkelabschnitt für die Zündkerze.

### Beschreibung der Ausführungsbeispiele

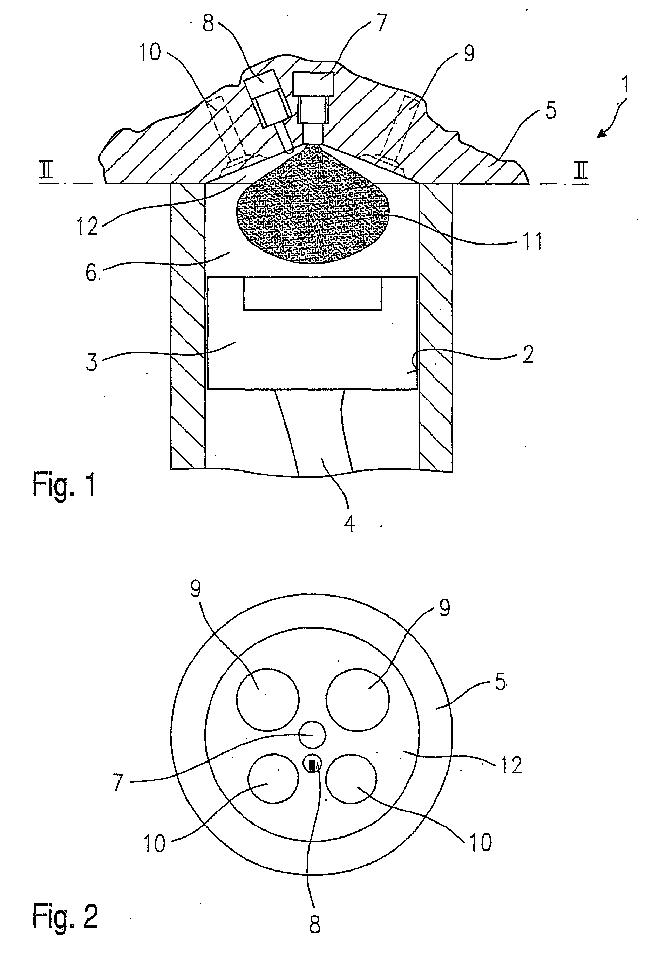

Fig. 1 zeigt in einer ausschnittsweisen Schnittdarstellung ein Ausführungsbeispiel des erfindungsgemäßen Brennstoffeinspritzsystems.

Das Brennstoffeinspritzsystem 1 umfaßt einen Zylinderblock mit einer Zylinderwand 2, in welcher ein Kolben 3 geführt ist. Der Kolben 3 wird durch eine Pleuelstange 4 an der Zylinderwand 2 auf- und abgeführt. Die Zylinderwand 2 ist endseitig durch einen Zylinderkopf 5 abgeschlossen. Die Zylinderwand 2, der Kolben 3 und der Zylinderkopf 5 schließen einen Brennraum 6 ein.

Im Zylinderkopf 5 ist ein Brennstoffeinspritzventil 7 vorzugsweise zentriert angeordnet. Etwas seitlich versetzt ist eine Zündkerze 8 in eine Bohrung des Zylinderkopfes 5 eingefügt. Weiterhin sind mindestens ein Einlaßventil 9 .und mindestens ein Auslaßventil 10 vorhanden. Die Anordnung von Brennstoffeinspritzventil 7, Zündkerze 8, Einlaßventil 9 und Auslaßventil 10 wird in Fig. 2 näher gezeigt.

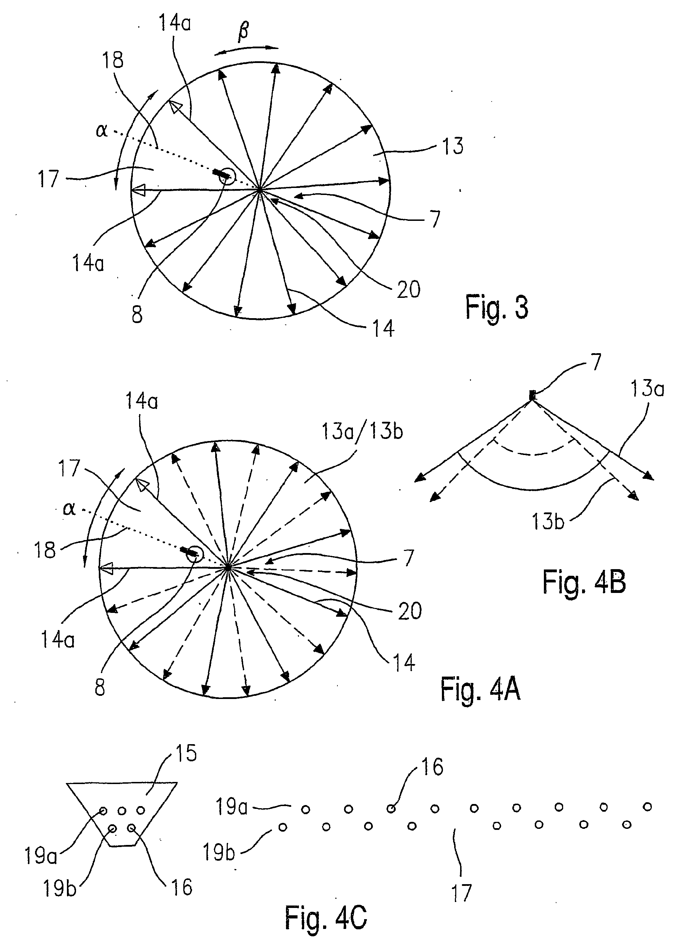

Beim im Betrieb befindlichen Brennstoffeinspritzsystem 1 wird durch im Brennstoffeinspritzventil 7 vorhandene Bohrungen ein kegelförmiger Brennstoffstrahl in den Brennraum 6 eingespritzt. Durch Vermischung von Brennstoff und Luft im Brennraum 6 wird eine Gemischwolke 11 gebildet. Die Gemischwolke 11 wird durch die Zündkerze 8 gezündet. Die Form des Kegelstrahls sowie die erfindungsgemäße Aussparung an der Zündkerze 8 wird anhand der Figuren 3 und 4 näher erläutert.

Fig. 2 zeigt in einer Schnittdarstellung entlang der in Fig. 1 mit II-II bezeichneten Linie einen Schnitt durch das in Fig. 1 dargestellte Ausführungsbeispiel eines erfindungsgemäßen Brennstoffeinspritzsystems 1. In einer Ausnehmung 12 des Zylinderkopfs 5 ist zentral das Brennstoffeinspritzventil 7 angeordnet. Die Zündkerze 8 ist in einem durch das Brennstoffeinspritzventil 7 und die beiden Auslaßventile 10 gebildeten Dreieck angeordnet. Symmetrisch zu den Auslaßventilen 10 sind zwei Einlaßventile 9 angeordnet. Die Einlaß- und Auslaßventile 9, 10 können auch seitlich vertauscht oder über Kreuz angeordnet sein.

In Fig. 3 ist schematisch ein Strahlbild des einen Kegelstrahl erzeugenden Brennstoffeinspritzventils 7 dargestellt. In der Mitte des einen Kegelmantel 13 andeutenden Kreises ist das Brennstoffeinspritzventil 7 angeordnet. Da das Brennstoffeinspritzventil 7 als Mehrloch-Brennstoffeinspritzventil ausgebildet ist, werden mehrere Einspritzstrahlen 14 in den Brennraum 6 eingespritzt. Die Einspritzstrahlen 14 sind als nach außen gerichtete Pfeile sinnbildlich dargestellt. Im vorliegenden Beispiel handelt es sich um ein Brennstoffeinspritzventil 7 mit dreizehn Spritzlöchern 16, welches dementsprechend dreizehn Einspritzstrahlen 14 erzeugt. Die einzelnen Einspritzstrahlen 14 besitzen untereinander jeweils einen Winkelabstand β, welcher im vorliegenden Ausführungsbeispiel 26° beträgt. Davon ausgenommen sind die Einspritzstrahlen 14a, welche rechts und links der Zündkerze 8 eingespritzt werden. Der Winkel α eines Winkelausschnitts 17 zwischen den die Zündkerze 8 einschließenden Einspritzstrahlen 14a beträgt 30° bis 60°, im vorliegenden Ausführungsbeispiel 45°. Dabei ist die Zündkerze 8 auf einer Winkelhalbierenden 18 des Winkels α angeordnet. Durch diese Anordnung wird erreicht, daß die Zündkerze 8 nicht direkt durch die Einspritzstrahlen 14 bzw. 14a angespritzt wird und dadurch die Verkokung der Zündkerze 8 signifikant gesenkt bzw. die Lebensdauer der Zündkerze 8 verlängert werden kann.

In Fig. 4A und 4B ist das Strahlbild eines Ausführungsbeispiels des Brennstoffeinspritzsystems 1 dargestellt.

Fig. 4A zeigt dabei das Strahlbild in einer Draufsicht analog zu Fig. 3. Im Zentrum des den Kegelmantel 13 darstellenden Kreises befindet sich das Brennstoffeinspritzventil 7. In diesem Fall wird die Gemischwolke 11 von zwei unterschiedlichen Kegelmänteln 13a und 13b erzeugt. Der Winkel α des Winkelausschnitts 17 zwischen den die Zündkerze 8 einschließenden Einspritzstrahlen 14a beträgt wiederum etwa 45°. Der Winkel β zwischen zwei außerhalb des Winkelabschnitts 17 benachbarten Einspritzstrahlen 14, die in diesem Ausführungsbeispiel jedoch in zwei verschiedenen Ebenen liegen, beträgt ca. 20°.

Fig. 4B verdeutlicht die zwei Kegelmantelflächen 13a und 13b, welche in diesem Ausführungsbeispiel durch insgesamt 17 Spritzlöcher aufgespannt werden. Dabei beträgt der Öffnungswinkel des inneren Kegelmantels 13b 90°, während der Öffnungswinkel des äußeren Kegelmantels 13a 110° beträgt. Der innere Kegelmantel 13b wird dabei von acht Einspritzstrahlen 14 aufgespannt, während der äußere Kegelmantel 13a von neun Einspritzstrahlen 14 aufgespannt wird. Auf diese Weise wird eine weitgehend homogene Gemischwolke 11 erzeugt, welche keine Magerbrücken aufweist.

In Fig. 4C ist ein Düsenkörper 15 des Mehrloch-Brennstoffeinspritzventils 7 schematisch dargestellt. Die Spritzlochanordnung des Düsenkörpers 15 ist daneben abgerollt dargestellt. Um den Winkelausschnitt 17 von 45° zu schaffen, ist es in diesem Ausführungsbeispiel lediglich notwendig, eines der in einer ersten ringförmigen Reihe 19b angeordneten Spritzlöcher 16, die den inneren Kegelmantel 13b bilden, auszulassen. Dadurch wird wiederum ein Winkelausschnitt 17 erzeugt, der es ermöglicht, das Brennstoffeinspritzventil 7 zu betreiben, ohne die Zündkerze 8 direkt anzuspritzen. Umgekehrt kann natürlich eine Lücke auch in der Anordnung der Spritzlöcher 16 einer zweiten ringförmigen Reihe 19a, die den äußeren Kegelmantel 13a erzeugen, vorgesehen sein.

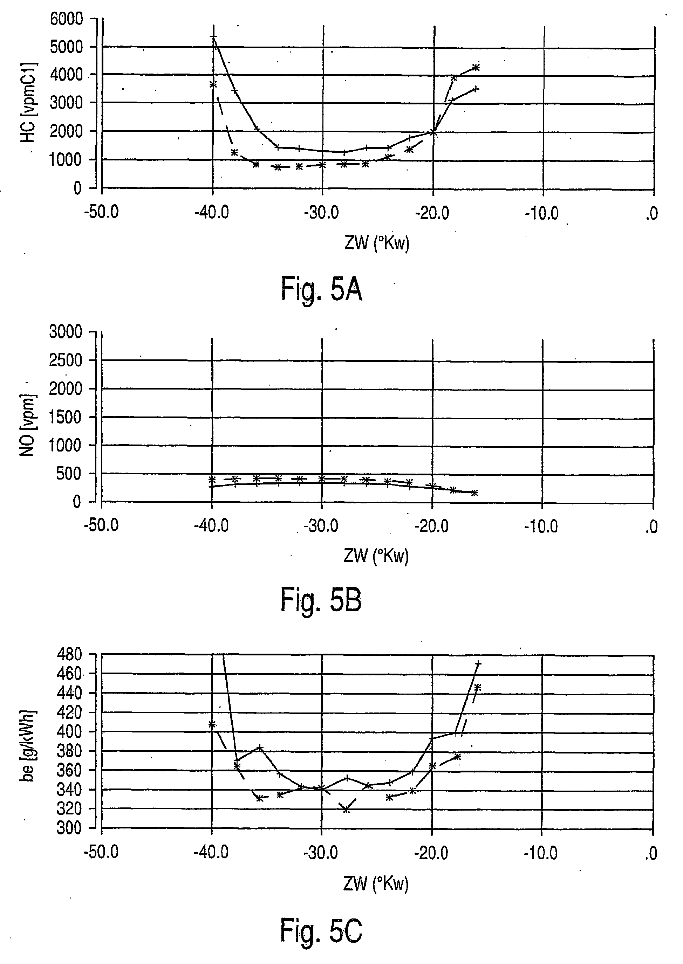

Fig. 5A-5C zeigen Diagramme der Kohlenwasserstoff- und Stickoxydemissionen sowie des spezifischen Brennstoffverbrauchs jeweils für ein Brennstoffeinspritzsystem mit und ohne den Winkelausschnitt 17 für die Zündkerze 8. Die Verbrauchs- und Emissionswerte sind dabei jeweils gegen den Zündwinkel in Einheiten des Kurbelwinkels, der an der Kurbelwelle gemessen wird, aufgetragen. Die durchgezogene Kurve stellt die Meßergebnisse für ein Brennstoffeinspritzsystem ohne Winkelausschnitt für die Zündkerze, die mit Sternchen gekennzeichnete gestrichelte Kurve die Meßergebnisse für ein Brennstoffeinspritzsystem mit Winkelausschnitt für die Zündkerze dar.

Generell läßt sich aus den Diagrammen in Fig. 5A-5C eine hohe Unabhängigkeit des strahlgeführten Brennverfahrens von dem Zündwinkel erkennen.

Fig. 5A zeigt die Kohlenwasserstoffemissionen in Volumeneinheiten für die jeweiligen Einspritzsysteme in Abhängigkeit vom Zündwinkel. Die Kohlenwasserstoffemissionen nehmen bei Verwendung eines Brennstoffeinspritzsystems mit Winkelausschnitt für die Zündkerze deutlich, teilweise bis zu 50%, gegenüber den Emissionen beim Betrieb eines Brennstoffeinspritzsystems ohne Winkelausschnitt für die Zündkerze ab.

Fig. 5B zeigt ein entsprechendes Diagramm für die Stickoxydemissionen ebenfalls in Volumeneinheiten in Abhängigkeit vom Zündwinkel. Die Emissionswerte für Stickoxyde bleiben dabei für beide Brennstoffeinspritzsysteme über den Zündwinkelverlauf nahezu gleich.

In Fig. 5C ist der spezifische Kraftstoffverbrauch für die verschiedenen Brennstoffeinspritzsysteme in Einheiten von Gramm pro Kilowattstunden in Abhängigkeit vom Zündwinkel dargestellt. Auch hier läßt sich eine erhebliche Verbesserung der Verbrauchswerte durch die Verwendung eines Brennstoffeinspritzsystems mit Winkelausschnitt für die Zündkerze verzeichnen, wobei der Minderverbrauch teilweise bis zu 15% beträgt.

Die Erfindung ist nicht auf die dargestellten Ausführungsbeispiele beschränkt und insbesondere für Mehrloch-Brennstoffeinspritzventile mit mehr oder weniger Spritzlöchern anwendbar. Ebenso können die Einspritzstrahlen auf mehr als zwei Abspritzkreisen (Reihen) angeordnet werden, um, dadurch die Homogenität des Brennstoff-Luftgemisches zu verbessern.

## Patentansprüche

1. Brennstoffeinspritzsystem (1) für Brennkraftmaschinen mit wenigstens einem Brennstoffeinspritzventil (7), das Brennstoff in einen Brennraum (6) einspritzt, der von einer Zylinderwand (2) begrenzt ist, in der ein Kolben (3) geführt ist, und mit einer in den Brennraum (6) ragenden Zündkerze (8), wobei das Brennstoffeinspritzventil (7) so mit zwei Reihen (19a, 19b) umfänglich angeordneter Spritzlöcher (16) ausgestaltet ist, dass in dem Brennraum (6) ein kegelförmiger Einspritzstrahl (13) erzeugt wird, der im Bereich der Zündkerze (8) einen Winkelausschnitt (17) aufweist,
**dadurch gekennzeichnet,**
**dass** die zwei Reihen (19a, 19b) umfänglich angeordneter Spritzlöcher (16) so um einen gemeinsamen Mittelpunkt (20) gegeneinander verdreht sind, dass die Spritzlöcher (16) der ersten Reihe (19b) auf den Winkelhalbierenden der Spritzlöcher (16) der zweiten Reihe (19a) angeordnet sind und die Reihen (19a, 19b) der Spritzlöcher (16) im Bereich der Zündkerze (8) den Winkelausschnitt (17) aufweisen.

2. Brennstoffeinspritzsystem nach Anspruch 1,
**dadurch gekennzeichnet,**
**dass** die Zündkerze (8) auf einer Winkelhalbierenden (18) des Winkelausschnitts (17) angeordnet ist.

3. Brennstoffeinspritzsystem nach Anspruch 2,
**dadurch gekennzeichnet,**
**dass** ein Kegelöffnungswinkel des Einspritzkegels (13) zwischen 60° und 150° beträgt.

4. Brennstoffeinspritzsystem nach einem der Ansprüche 1 bis 3,
**dadurch gekennzeichnet,**
**dass** die Spritzlöcher (16) außerhalb des Winkelausschnitts (17) einen gegenseitigen Winkelabstand besitzen, der zwischen 20° und 30° beträgt.

5. Brennstoffeinspritzsystem nach Anspruch 4,
**dadurch gekennzeichnet,**
**dass** der Abstand der Spritzlöcher (16) zur Bildung des Winkelabschnitts (17) zwischen 30° und 60° liegt.

## Claims

1. Fuel injection system (1) for internal combustion engines having at least one fuel injection valve (7) which injects fuel into a combustion chamber (6) which is delimited by a cylinder wall (2) in which a piston (3) is guided, and having a spark plug (8) which projects into the combustion chamber (6), the fuel injection valve (7) being embodied with two rows (19a, 19b) of circumferentially arranged spray holes (16) in such a way that a conical injection jet (13), which has a cut-out sector (17) in the region of the spark plug (8), is generated in the combustion chamber (6),
**characterized**
**in that** the two rows (19a, 19b) of circumferentially arranged spray holes (16) are offset relative to one another in the rotational direction about a common centre (20) in such a way that the spray holes (16) of the first row (19b) are arranged on the angle bisector of the spray holes (16) of the second row (19a) and the rows (19a, 19b) of spray holes (16) have the cut-out sector (17) in the region of the spark plug (8).

2. Fuel injection system according to Claim 1,
**characterized**
**in that** the spark plug (8) is arranged on an angle bisector (18) of the cut-out sector (17).

3. Fuel injection system according to Claim 2,
**characterized**
**in that** an opening angle of the injection cone (13) is between 60° and 150°.

4. Fuel injection system according to one of Claims 1 to 3,
**characterized**
**in that** the spray holes (16) outside the cut-out sector (17) have a angular separation to one another of between 20° and 30°.

5. Fuel injection system according to Claim 4,
**characterized**
**in that** to form the cut-out sector (17), the separation of the spray holes (16) is between 30° and 60°.

## Revendications

1. Système d'injection de carburant (1) pour moteurs à combustion interne, comprenant au moins un injecteur de carburant (7) qui injecte du carburant dans une chambre de combustion (6) délimitée par une paroi de cylindre (2) guidant un piston (3), et une bougie d'allumage (8) saillant dans la chambre de combustion (6),
dans lequel l'injecteur de carburant (7) est muni en périphérie de deux rangées (19a, 19b) de trous d'injection (16) pour ainsi générer dans la chambre de combustion (6) un jet d'injection conique (13) dont un segment angulaire (17) se trouve dans la zone de la bougie d'allumage (8),
**caractérisé en ce que**
les deux rangées (19a, 19b) de trous d'injection (16) disposés à la périphérie sont décalées en rotation l'une par rapport à l'autre autour d'un point central (20) commun de telle sorte que les trous d'injection (16) de la première rangée (19b) sont disposés sur les bissectrices des trous d'injection (16) de la deuxième rangée (19a), les rangées (19a, 19b) de trous d'injection (16) présentant le segment angulaire (17) dans la zone de la bougie d'allumage (8).

2. Système d'injection de carburant selon la revendication 1,
**caractérisé en ce que**
la bougie d'allumage (8) est disposée sur une bissectrice (18) du segment angulaire (17).

3. Système d'injection de carburant selon la revendication 2,
**caractérisé en ce qu'**
un angle d'ouverture conique du cône d'injection (13) est compris entre 60° et 150°.

4. Système d'injection de carburant selon l'une quelconque des revendication 1 à 3,
**caractérisé en ce qu'**
à l'extérieur du segment angulaire (17), les trous d'injection (16) présentent une distance angulaire réciproque située entre 20° et 30°.

5. Système d'injection de carburant selon la revendication 4,
**caractérisé en ce que**
la distance des trous d'injection (16) pour former le segment angulaire (17) se situe entre 30° et 60°.
